Europäisches Patentamt

(19) European Patent Office

Office européen des brevets

(11) Veröffentlichungsnummer : **0 366 691 B1**

(12) # EUROPÄISCHE PATENTSCHRIFT

(45) Veröffentlichungstag der Patentschrift :
06.11.91 Patentblatt 91/45

(51) Int. Cl.$^5$ : **B62D 5/04**

(21) Anmeldenummer : **88905777.4**

(22) Anmeldetag : **25.06.88**

(86) Internationale Anmeldenummer :
**PCT/EP88/00563**

(87) Internationale Veröffentlichungsnummer :
**WO 89/00124 12.01.89 Gazette 89/02**

(54) **ZAHNSTANGEN-HILFSKRAFTLENKUNG, INSBESONDERE FÜR KRAFTFAHRZEUGE.**

(30) Priorität : **03.07.87 DE 3722058**

(43) Veröffentlichungstag der Anmeldung :
**09.05.90 Patentblatt 90/19**

(45) Bekanntmachung des Hinweises auf die
Patenterteilung :
**06.11.91 Patentblatt 91/45**

(84) Benannte Vertragsstaaten :
**DE FR GB IT SE**

(56) Entgegenhaltungen :
**EP-A- 0 011 579**
**EP-A- 0 081 025**
**FR-A- 2 442 476**

(73) Patentinhaber : **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder : **LANG, Armin
Rheinstra e 10
W-7070 Schwäbisch Gmünd (DE)**
Erfinder : **KNÖDLER, Helmut
Elsternweg 6
W-7073 Lorch (DE)**

(74) Vertreter : **Raue, Reimund et al
Zahnradfabrik Friedrichshafen AG Löwentaler
Strasse 100 Postfach 2520
W-7990 Friedrichshafen 1 (DE)**

# Beschreibung

Die Erfindung betrifft eine Zahnstangen-Hilfskraftlenkung, insbesondere für Kraftfahrzeuge, nach dem Oberbegriff des Anspruches 1.

Eine derartige Hilfskraftlenkung ist Gegenstand der älteren, nicht vorveröffentlichten internationalen Patentanmeldung PCT/EP 86/00426. Bei dieser Hilfskraftlenkung wird die Handlenkung durch einen Elektromotor unterstützt, der über ein Trennglied mit der Zahnstange in Triebverbindung gebracht werden kann. Eine Sicherheits-Schalteinrichtung öffnet das Trennglied, wenn in einem elektrischen Steuerkreis oder in einem redundanten Sicherheitskreis Fehlinformationen auftreten, die zu einem Störfall in der Lenkung führen könnten.

Der Erfindung liegt die Aufgabe zugrunde, eine derartige Zahnstangen-Hilfskraftlenkung dahingehend weiter zu entwickeln, daß eine Fehlsteuerung der Lenkung einfach und sicher verhindert werden kann.

Diese Aufgabe wird durch die im Anspruch 1 gekennzeichnete Zahnstangen-Hilfskraftlenkung gelöst. Vorteilhafte und zweckmäßige Ausgestaltungen sind in den Unteransprüchen angegeben.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Durch die Verbindung der Zahnstange mit einer Kugelmutter und die Verbindung der Abtriebswelle des Elektromotors mit einer Gewindespindel wird die Drehbewegung des Elektromotors auf einfache Weise in eine hin- und hergehende Bewegung der Zahnstange umgewandelt. Besonders vorteilhaft ist hierbei, daß das Kugelumlaufgewinde der Gewindespindel einen vergleichsweise kleinen Durchmesser aufweisen kann, wodurch trotz der erforderlichen Übersetzung ein ausreichend großer Steigungswinkel einen guten Rückdrehwirkungsgrad ergibt. Dabei kann die axiale Verschiebbarkeit der Gewindespindel auf einfache Weise zur Drehmomentmessung für die Sicherheits-Schalteinrichtung verwendet werden.

Mit Hilfe des mit der Gewindespindel verbundenen Hebels wird die Axialbewegung der Gewindespindel auf zwei Schalter der Sicherheits-Schalteinrichtung übertragen. Dadurch wird oberhalb einer bestimmten Ansprechschwelle die Richtung des Drehmoments an der Gewindespindel gemessen und für eine Funktionsüberwachung der Lenkung benutzt.

Um das Motordrehmoment von der feststehenden Motorwelle bzw. Kupplung auf die axial bewegliche Gewindespindel übertragen zu können, wird in vorteilhafter Weise zwischen der Gewindespindel und der einen Kupplungshälfte ein Federbalg angeordnet. Der Federbalg dient außerdem dazu, Fluchtungsfehler im Antriebsstrang von dem Elektromotor zur Zahnstange auszugleichen.

Im folgenden wird die Erfindung anhand eines in der Zeichnung dargestellten Ausführungsbeispieles näher erläutert. Es zeigt

Fig. 1 eine schematische Darstellung der erfindungsgemäßen Zahnstangen-Hilfskraftlenkung,

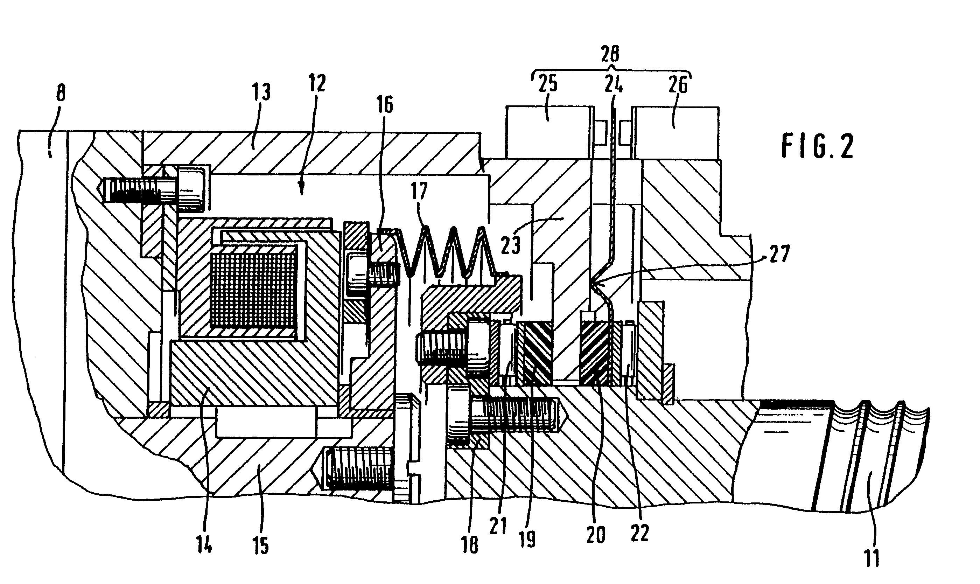

Fig. 2 einen Teilschnitt durch die Sicherheits-Schalteinrichtung der Hilfskraftlenkung nach Fig. 1, in vergrößertem Maßstab.

Der mechanische Teil der Zahnstangen-Hilfskraftlenkung enthält ein Zahnstangen-Lenkgetriebe 1, dessen Primärteil von einem Ritzel 2 und dessen Sekundärteil von einer Zahnstange 3 gebildet wird. Das Ritzel 2 ist über einen Lenkspindelanschluß 4 mit einem nicht dargestellten Lenkhandrad verbunden. Die Zahnstange 3 ist in bekannter Weise über ein Lenkgestänge 5, 6 mit den zu lenkenden Fahrzeugrädern verbunden.

Zwischen dem Lenkspindelanschluß 4 und dem Ritzel 2 ist eine Drehmoment-Meßeinrichtung 7 eingebaut. Die Drehmoment-Meßeinrichtung 7 erfaßt das Relativmoment zwischen dem Lenkspindelanschluß 4 und dem Ritzel 2 und steuert über einen nicht dargestellten Elektronik-Baustein den Antrieb eines Elektromotors 8.

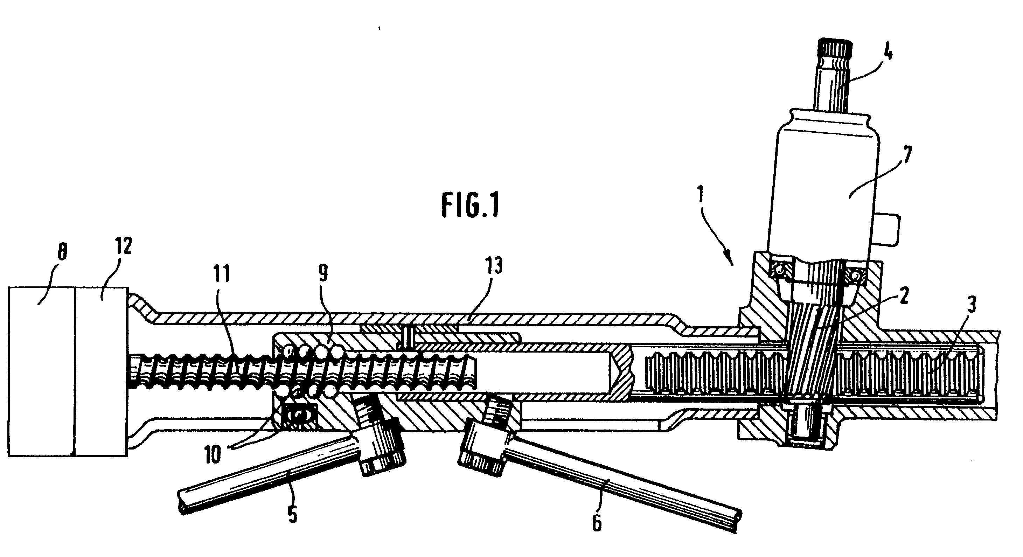

Mit der Zahnstange 3 ist eine Kugelmutter 9 drehfest verbunden. Die Kugelmutter 9 steht über einen Kugelumlauf 10 mit einer Gewindespindel 11 in trieblicher Verbindung. Die Gewindespindel 11 ist über ein Trennglied in der Form einer, in Fig. 1 nur schematisch dargestellten Kupplung 12 mit dem Elektromotor 8 verbunden.

Das Ritzel 2, die Zahnstange 3, die Kugelmutter 9, die Kupplung 12 und die dazwischenliegenden Teile sind von einem mehrteiligen Gehäuse 13 umschlossen.

Ein Antriebsteil 14 der Kupplung 12 ist mit der Abtriebswelle 15 des Elektromotors 8 drehfest verbunden. Ein Abtriebsteil 16 der Kupplung 12 ist über einen Federbalg 17 mit einem an der Gewindespindel 11 befestigten Flansch 18 verbunden.

Die Gewindespindel 11 ist über zwei elastische Zwischenringe 19 und 20 und zwei Axiallager 21 und 22 gegenüber einem Gehäuseboden 23 des feststehenden Gehäuses 13 axial verschiebbar und drehbar gelagert.

An der Gewindespindel 11 ist ein gemeinsam mit dieser axial verschiebbarer Hebel 24 angeordnet. Der Hebel 24 ist zwischen dem einen elastischen Zwischenring 20 und dem einen Axiallager 22 eingespannt und dadurch gegenüber dem feststehenden Gehäuse 13 verdrehfest gehalten. An dem Gehäuse 13 sind zwei Schalter 25 und 26 angeordnet, die durch das freie Ende des Hebels 24 betätigbar sind. Zur Vergrößerung des Verstellweges am freien Ende des Hebels 24 ist der Nebel 24 mit einer Abkröpfung 27 versehen. Durch die beiden Schalter 25 und 26 und den Hebel 24 wird eine Sicherheits-Schalteinrichtung 28 gebildet.

Im folgenden wird die Funktion der Zahnstangen-Hilfskraftlenkung mit der Sicherheits-Schalteinrichtung beschrieben: Wird durch eine Drehbewegung des nicht dargestellten Lenkhandrades am Lenkspindelanschluß 4 beispielsweise ein rechtsdrehendes Moment eingeleitet, so stützt sich dieses über das Ritzel 2, die Zahnstange 3 und das Lenkgestänge 5, 6 an den zu lenkenden Fahrzeugrädern ab. Die Drehmoment-Meßeinrichtung 7 registriert ein entsprechendes Drehmoment. Dieses wird in einem nicht dargestellten Elektronik-Baustein aufbereitet und der Elektromotor 8 im Sinne einer Rechtlenkung angetrieben. Dadurch wird das Ritzel 2 entlastet und die Gewindespindel 11 axial verschoben. Dadurch wird eines der Axiallager 21 bzw. 22 gegen einen der elastischen Zwischenringe 19 bzw. 20 gedrückt, der entsprechend der von der Gewindespindel 11 ausgeübten Axialkraft zusammengedrückt wird. Der jeweils nicht zusammengedrückte elastische Zwischenring 20 bzw. 19 dehnt sich dabei aus. Das eingespannte Ende des Hebels 24 bewegt sich zusammen mit der Gewindespindel 11, so daß das freie Ende des Hebels 24 in entgegengesetzter Richtung gegen einen der Schalter 25 bzw. 26 gedrückt wird. Durch die formschlüssige Auftrennung des stromlosen Schalters 25 bzw. 26 wird die servoelektrische Unterstützung nicht unterbrochen. Durch die servoelektrische Unterstützung ergibt sich die gewünschte Verminderung des Momentes an dem Lenkspindelanschluß 4. In diesem normalen Betriebszustand ist die Kupplung 12 geschlossen.

Wird jedoch an der Abtriebswelle 15 des Elektromotors 8 und damit an der Gewindespindel 11 ein Drehmoment erzeugt, dessen Richtung nicht mit dem am Lenkspindelanschluß 4 eingeleiteten Drehmoment übereinstimmt, so verschiebt sich die Gewindespindel 11 so in axialer Richtung, daß durch die formschlüssige Auftrennung des stromführenden Schalters 25 bzw. 26 die Kupplung 12 stromlos wird und sicher öffnet und der Elektromotor 8 von der Antriebsverbindung mit der Zahnstange 3 getrennt wird. Dadurch wird eine Fehlfunktion der Zahnstangen-Hilfskraftlenkung sofort vermieden.

Bezugszeichen

| | |
|---|---|
| 1 | Zahnstangen-Lenkgetriebe |
| 2 | Ritzel |
| 3 | Zahnstange |
| 4 | Lenkspindelanschluß |
| 5 | Lenkgestänge |
| 6 | Lenkgestänge |
| 7 | Drehmoment-Meßeinrichtung |
| 8 | Elektromotor |
| 9 | Kugelmutter |
| 10 | Kugelumlauf |
| 11 | Gewindespindel |
| 12 | Kupplung |
| 13 | Gehäuse |
| 14 | Antriebsteil |
| 15 | Abtriebswelle |
| 16 | Abtriebsteil |
| 17 | Federbalg |
| 18 | Flansch |
| 19 | elastischer Zwischenring |
| 20 | elastischer Zwischenring |
| 21 | Axiallager |
| 22 | Axiallager |
| 23 | Gehäuseboden |
| 24 | Hebel |
| 25 | Schalter |
| 26 | Schalter |
| 27 | Abkröpfung |
| 28 | Sicherheits-Schalteinrichtung |

**Patentansprüche**

1. Zahnstangen-Hilfskraftlenkung, insbesondere für Kraftfahrzeuge, mit einem in einem Gehäuse (13) angeordneten, in die Verzahnung einer Zahnstange (3) eingreifenden Ritzel (2), mit einem die Handlenkung unterstützenden Elektromotor (8), der über ein der Zu- und Abschaltung des Elektromotors (8) dienendes Trennglied mit der Zahnstange (3) in Triebverbindung steht, und mit einer Sicherheits-Schalteinrichtung (28), die das Trennglied beim Auftreten von Fehlinformationen aus der Drehmoment-Meßeinrichtung (13) öffnet, dadurch **gekennzeichnet**,
   – daß mit der Zahnstange (3) eine Kugelmutter (9) verbunden ist, die über einen Kugelumlauf (10) mit einer Gewindespindel (11) in Verbindung steht,
   – daß die Gewindespindel (11) axial federnd gelagert ist,
   – daß die axiale Stellung der Gewindespindel (11) von der Sicherheits-Schalteinrichtung (28) erfaßt wird, und
   – daß das Trennglied als Kupplung (12) zwischen dem Elektromotor (8) und der Gewindespindel (11) angeordnet ist.

2. Zahnstangen-Hilfskraftlenkung nach Anspruch 1, dadurch **gekennzeichnet**, daß die Gewindespindel (11) über einen Federbalg (17) axial verschiebbar aber drehfest mit einem an den Elektromotor (8) an- und abkuppelbaren Abtriebsteil (16) der Kupplung (12) und über elastische Zwischenringe (19, 20) und Axiallager (21, 22) axial verschiebbar und drehbar mit dem feststehenden Gehäuse (13) verbunden ist.

3. Zahnstangen-Hilfskraftlenkung nach Anspruch 2, dadurch **gekennzeichnet**, daß die Sicherheits-Schalteinrichtung (28) einen gegenüber der Gewindespindel (11) an seinem einen Ende axial festgelegten und gegenüber dem feststehenden Gehäuse (13) verdrehfesten Hebel (24) enthält und daß zwei Schalter (25, 26) der Sicherheits-Schalteinrichtung (28) an dem Gehäuse (13) angeordnet sind, die durch das freie Ende des Hebels (24) zur Abschaltung der Kupplung (12) betätigbar sind.

4. Zahnstangen-Hilfskraftlenkung nach Anspruch 3, dadurch **gekennzeichnet**, daß der Hebel (24) als Federhebel mit einer sich an dem feststehenden Gehäuse (13) abstützenden Abkröpfung (27) ausgebildet ist.

5. Zahnstangen-Hilfskraftlenkung nach Anspruch 2, dadurch **gekennzeichnet**, daß die elastischen Zwischenringe (19, 20) mit Vorspannung eingebaut sind.

## Claims

1. A toothed rack power-assisted steering, more particularly for motor vehicles, comprising a pinion (2) arranged in a housing (13) and engaging in the toothing of a toothed rack (3), an electomotor (8), which reinforces the manual steering and is in driving connection with the toothed rack (3) via a separating element used for switching the electromotor (8) on and off, and a safety switching device (28), which opens the separating element when faulty data is received from the torque measuring device ( 13), characterised in that

    – a ball nut (9) is connected with the toothed rack (3) and is connected via a ball orbit (10) with a threaded spindle (11),
    – the threaded spindle (11) is mounted so as to be axially resilient,
    – the axial position of the threaded spindle (11) is detected by the safety switching device (28), and
    – the separating element is arranged as a coupling (12) between the electromotor (8) and the threaded spindle (11).

2. A toothed rack power-assisted steering according to claim 1, characterised in that the threaded spindle (11) is connected via spring bellows (17) so as to be axially displaceable but rotationally rigid with an output element (16) of the coupling (12), which element can be coupled with and uncoupled from the electromotor (8), and the threaded spindle (11) is connected via elastic intermediate rings (19, 20) and axial bearings (21, 22) so as to be axially displaceable and rotatable with the stationary housing (13).

3. A toothed rack power-assisted steering according to claim 2, characterised in that the safety switching device (28) comprises a lever (24), which is fixed axially at its one end relative to the threaded spindle (11) and is rotationally rigid relative to the stationary housing (13), and two switches (25, 26) of the safety switching device (28) are arranged on the housing (13) and can be actuated by the free end of the ever (24) in order to disconnect the coupling (12).

4. A toothed rack power-assisted steering according to claim 3, characterised in that the lever (24) is designed as a spring lever having an elbow (27) resting against the stationary housing (13).

5. A toothed rack power-assisted steering according to claim 2, characterised in that the elastic intermediate rings (19, 20) are fitted with prestressing.

## Revendications

1. Servodirection à crémaillère, en particulier pour véhicules à moteur, comportant un pignon (2) disposé dans un boîtier (13) et attaquant la denture d'une crémaillère (3), un moteur électrique (8) qui assiste la direction manuelle et qui est en liaison motrice avec la crémaillère (3) par l'intermédiaire d'un organe de coupure servant à enclencher et déclencher le moteur électrique (8), et un commutateur de sécurité (28) qui ouvre l'organe de coupure en cas d'informations d'erreur provenant du dispositif de mesure de couple (13), caractérisée:

    – en ce que la crémaillère (3) est raccordée à un écrou à billes (9) relié à une tige filetée (11) par un circuit de billes (10),
    – en ce que la tige filetée (11) est montée élastiquement en direction axiale,
    – en ce que la position axiale de la tige filetée (11) est détectée par le commutateur de sécurité (28), et
    – en ce que l'organe de coupure est formé par un embrayage (12) entre le moteur électrique (8) et la tige filetée (11).

2. Servodirection à crémaillère selon la revendication 1, caractérisée en ce que la tige filetée (11) est raccordée de manière coulissante axialement mais rigide en rotation, au moyen d'un souflet élastique (17), à un élément de sortie (16) de l'embrayage (12), susceptible d'être couplé au moteur électrique (8) et découplé de celui-ci, et est raccordée au boîtier stationnaire (13) de manière coulissante axialement et rotative, au moyen de bagues intermédiaires élastiques (19, 20) et de paliers axiaux (21, 22).

3. Servodirection à crémaillère selon la revendication 2, caractérisée en ce que le commutateur de sécurité (28) comporte un levier (24) fixe en rotation par rapport au boîtier stationnaire (13) et fixé axialement à sa première extrémité par rapport à la tige filetée (11) et en ce que deux interrupteurs (25, 26) du commutateur de sécurité (28) sont montés sur le boîtier (13) et sont actionnés par l'extrémité libre du levier (24) pour déclencher l'embrayage (12).

4. Servodirection à crémaillère selon la revendication 3, caractérisée en ce que le levier (24) est formé par un levier élastique ayant une partie coudée (27) qui s'appuie contre le boîtier stationnaire (13).

5. Servodirection à crémaillère selon la revendication 2, caractérisée en ce que les bagues intermédiaires élastiques (19, 20) sont montées sous précontrainte.

FIG.1

EP 0 366 691 B1

FIG.2